# EUROPEAN PATENT APPLICATION

(11) **EP 0 832 703 A1**
(43) Date of publication of application: **01.04.1998**
(21) Application number: 97106383.9
(22) Date of filing: 17.04.1997
(51) Int. Cl.: B21K 1/56

(54) **Method for producing a metal part having internal threads and machine therefor**

(30) Priority: 30.09.1996 JP 258898/96
(71) Applicant: M.H. CENTER LIMITED, Misato-shi, Saitama-ken (JP)
(72) Inventor: Aoyama, Susumu, Misato-shi, Saitama-Ken (JP)
(74) Representative: Kern, Wolfgang, Dipl.-Ing.

(57) **Abstract**

The present invention relates to a method for producing metal parts (20) having internal threads (22) which can be removed readily from a core bar (30) without turning the formed metal parts (20) having internal threads (22), and machine therefor. The invention comprises the steps of inserting a second core bar (50) axially into the center of a first core bar (30) which is axially divided into a multiple number and has a male thread section (35) on its outer periphery; putting a metal cylinder (20) on the male thread section (35) of the first core bar (30); applying a pressure by a plurality of punches (60) to the outer periphery of the metal cylinder (20) in a centripetal direction to deform the metal cylinder to transfer the male thread section (35) of the first core bar (30) to the inner wall (21) of the metal cylinder (20) to form a female thread section (22); removing the second core bar (50) which has been axially inserted into the center of the first core bar (30) from the male thread section (35); and contracting the diameter of the male thread section (35) of the first core bar (30) in a centripetal direction to enable the removal of the metal cylinder (20) having the female thread section (22) formed therein without twisting.

## Description

### BACKGROUND OF THE INVENTION

### FIELD OF THE INVENTION

The present invention relates to a method for producing metal parts having internal threads and a machine therefor.

### BACKGROUND ART

It is known to form female threads by putting a work piece such as a cup or a cylinder made of a metal material on a core bar having male threads, and applying a pressure by a plurality of punches to the outer periphery of the work piece in a centripetal direction to deform the work piece to transfer the shape of the core bar to the inner wall of the work piece in view of, for example, U.S. Patent No. 5,139,380, U.S. Patent No. 3,496,800, U.S. Patent 3,877,341, U.S. Patent 4,826,379, U.S. Patent No. 4,055,929, Swedish Patent No. 169,556, Australian Patent No. 130,635, British Patent No. 152,854 and British Patent No. 1,439,811.

Fig. 6 to Fig. 8 show a rivet nut 1 and its production method described in British Patent No. 1,439,811.

A thread ridge 3 is formed on the inner wall of a shaft 2. This thread ridge 3 is formed of six intermittent low thread ridge portions 4.

And, six vertical grooves 5 are formed on the outer wall of the shaft 2.

As shown in Fig. 8, the rivet nut 1 is produced by inserting a core bar 7 into the shaft 2, pressing the shaft 2 toward the core bar 7 by a jaw 10 provided on the outer periphery of the shaft 2 with the leading end of the shaft 2 kept in contact with a stopper 9, thereby transferring thread ridges 8 of the core bar 7 to the inner wall of the shaft 2.

However, this method for producing the rivet nut 1 needs to twist the core bar 7 to remove the core bar 7 because the shaft 2 is closely adhered to the thread ridges 8 of the core bar 7 by pressing the jaw 10 against the shaft 2.

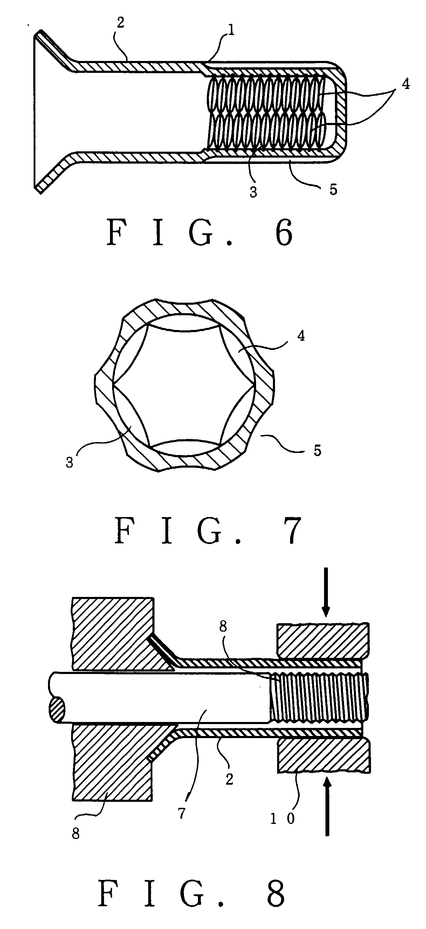

Therefore, it was hard to produce the rivet nut 1 shown in Fig. 6 and Fig. 7.

U.S. Patent No. 3,496,800, U.S. Patent 3,877,341, U.S. Patent 4,826,379, Australian Patent No. 130,635, British Patent No. 152,854, and U.S. Patent No. 4,055,929 need to twist to remove the core bar after working in the same way as in British Patent No. 1,439,811.

And, in U.S. Patent No. 5,139,380, threads 25, 26 are intermittent threads but threads 28 are positioned along the circumference of a nut 10, so that the core bar cannot be removed by squeezing, and it is necessary to cut the threads.

Besides, Swedish Patent No. 169,556 does not disclose about the removal of the core bar.

Therefore, the core bar and the jaw may be designed to be disassembable, but it becomes difficult to align the product pitch and not practical.

### SUMMARY OF THE INVENTION

The present invention has been completed to remedy the above existing disadvantages, and aims to provide a method and machine for producing metal parts having internal threads which can be removed readily from a core bar without turning the formed metal parts having internal threads.

The invention of claim 1 comprises the steps of inserting a second core bar axially into the center of a first core bar which is axially divided into a multiple number and has a male thread section on its outer periphery; putting a metal cylinder on the male thread section of the first core bar; applying a pressure by a plurality of punches to the outer periphery of the metal cylinder in a centripetal direction to deform the metal cylinder to transfer the male thread section of the first core bar to the inner wall of the metal cylinder to form a female thread section; removing the second core bar which has been axially inserted into the center of the first core bar from the male thread section; and contracting the diameter of the male thread section of the first core bar in a centripetal direction to enable the removal of the metal cylinder having the female thread section formed therein without twisting.

The invention of claim 2 relates to a method for producing a metal part having internal threads according to claim 1, wherein when the female threads are formed, the second core bar is tightly adhered axially to the inner wall of the first core bar, the first core bar is served as a rigid body to form the female threads, and the second core bar is removed from the male thread section, the diameter of the male thread section of the first core bar is contracted in the centripetal direction to make a thread ridge diameter of the male thread section of the first core bar smaller than that of the formed female threads.

The invention of claim 3 comprises a first core bar which is axially divided into a multiple number and has a male thread section formed on its outer periphery; a second core bar which is axially inserted into the center of the first core bar; a plurality of punches which are provided around the male threshold section of the first core bar; and a pressing tool which is provided on the outer periphery of the first core bar and contracts the diameter of the male thread section of the first core bar in a centripetal direction.

The invention of claim 4 relates to a machine for producing a metal part having internal threads according to claim 3, wherein the first core bar has a base having a through hole, and a male thread core bar member which is interconnected with the base, formed via slits which are disposed parallel to an axis and equal in a radial direction and has a male thread section formed on the outer periphery of its leading end.

The invention of claim 5 relates to a machine for producing a metal part having internal threads according to claim 4, wherein each male thread core bar member has a male thread section, a sloped section and an elastic deformable section for contracting the male thread section.

The invention of claim 6 relates to a machine for producing a metal part having internal threads according to any one of claim 3 through claim 5, wherein the pressing tool is made of a ring-shaped member having a sloped inner wall corresponding to the sloped section of the male thread core bar member of the first core bar.

By the inventions of claims 1 to 6, a second core bar is axially inserted in the center of a first core bar which is axially divided into a multiple number and formed a male thread section on the outer periphery. Thus, the second core bar can be tightly adhered axially to the inner wall of the first core bar and the first core bar can be served as a rigid body while female threads are being formed.

Then, a metal cylinder is put on the male thread section of the first core bar. The outer periphery of the metal cylinder is pressed in a centripetal direction by a plurality of punches to deform the metal cylinder and the male thread section of the first core bar is transferred to form a female thread section on the inner wall of the metal cylinder. And, the second core bar which was axially inserted in the center of the first core bar is removed from the male thread section. Thus, after forming the female threads, the second core bar is removed from the male thread area, the diameter of the male thread section of the first core bar is contracted in a centripetal direction, and the thread ridge diameter of the male thread section of the first core bar can be contracted to be smaller than that of the formed female threads.

Then, the male thread section of the first core bar is contracted in the centripetal direction, and the metal cylinder which has the female thread section formed on its inner wall can be removed without twisting.

### BRIEF DESCRIPTION OF THE DRAWINGS

Fig. 1 is a vertical sectional view showing a state immediately before processing a cup-shaped metal material 20.

Fig. 2 is a plane view of a first core bar of Fig. 1.

Fig. 3 is a vertical sectional view of a first core bar of Fig. 1.

Fig. 4 is a vertical sectional view showing a state of processing the cup-shaped metal material 20.

Fig. 5 is a vertical sectional view showing a state of removing the cup-shaped metal material 20 having the internal threads formed.

Fig. 6 is a transverse sectional view showing a rivet nut as an example having conventional internal threads formed.

Fig. 7 is a vertical sectional view of the rivet nut of Fig. 6.

Fig. 8 is a sectional view showing a method for producing the rivet nut of Fig. 6.

### BEST MODE FOR CARRYING OUT THE INVENTION

The invention will be described with reference to the embodiments shown in the accompanying drawings.

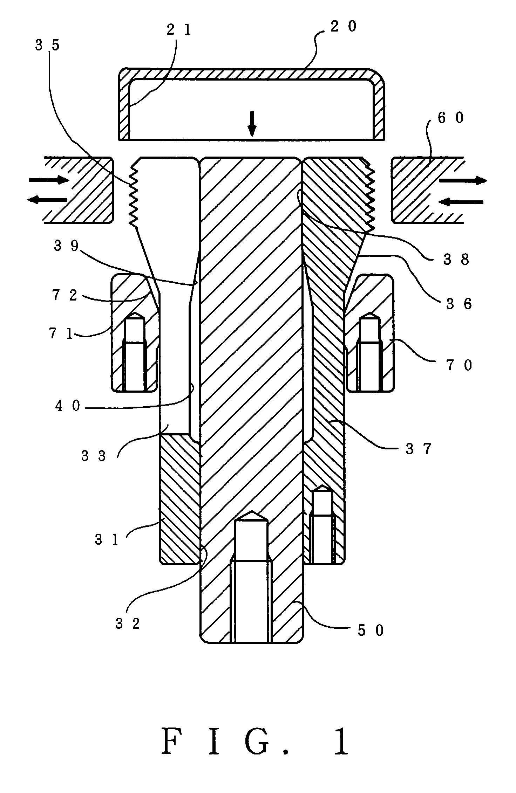

Fig. 1 to Fig. 5 show one embodiment in that the method and machine for producing a metal part having internal threads described in claims 1 to 6 is applied to a cup-shaped metal material 20.

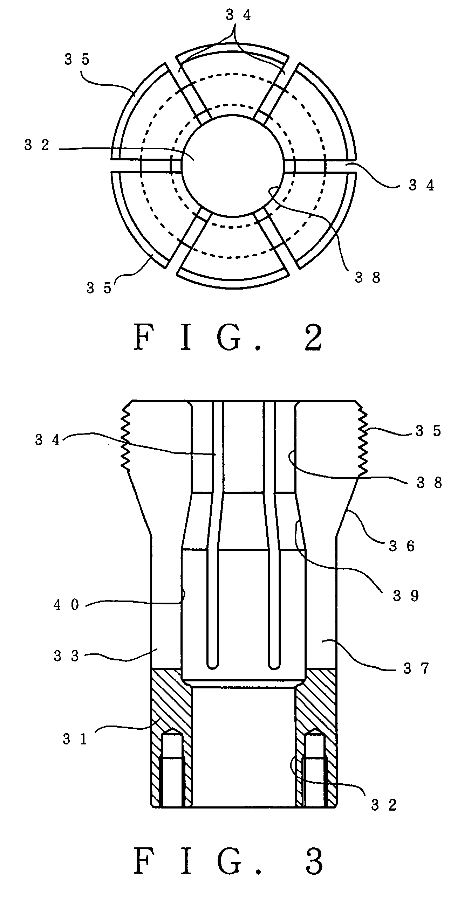

As shown in Fig. 2 and Fig. 3, a first core bar 30 has a base 31 having a through hole 32, and a male thread core bar member 33 which is interconnected with the base 31, formed via six slits 34 which are disposed parallel to an axis and equal in a radial direction and has a male thread section 35 formed on the outer periphery of its leading end.

Each male thread core bar member 33 has the male thread section 35, a sloped section 36, and an elastic deformable section 37 for contracting the male thread section from its leading end to the base 31.

A through hole which is concentric with the through hole 32 of the base 31 is axially formed at the center of the respective male thread core bar member 33. An inner wall 38 of the male thread section 35 has a diameter equal to the through hole 32, and an inner wall 39 of the sloped section 36 and an inner wall 40 of the elastic deformable section 37 have a diameter larger than the through hole 32.

Here, the inner wall 40 of the elastic deformable section 37 has a diameter larger than that of the inner wall 39 of the sloped section 36. In other words, the elastic deformable section 37 is the thinnest section in the male thread core bar member 33 and can be deflected when exposed to an external force.

And, the sloped section 36 serves to connect the male thread section 35 and the elastic deformable section 37 and to engage with a sloped bore of a ring member to be described afterward.

As described above, the first core bar 30 has the male thread section 35 divided by the six slits 34 which are disposed parallel to an axis and equal in a radial direction but integrally formed as the core bar.

The first core bar 30 is mounted on a production machine with the base 31 as a mounting part .

A second core bar 50 is a bar material having almost the same diameter as the through hole 32. And, it is mounted on a machine independent of the one for the first core bar 30 and can be moved solely.

In this embodiment, there are six punches 60, which are moved horizontally to open or close with respect to the male thread section 35 of the first core bar 30.

A pressing tool 70 is provided on the outer periphery of the first core bar 30.

The pressing tool 70 is formed of a ring-shaped member 71 having a sloped inner wall 72 corresponding to the sloped section 36 of the male thread core bar member 33 of the first core bar 30. This ring-shaped member 71 is operated by a drive source such as a hydraulic cylinder.

Now, description will be made of cold pressing of the internal threads of the cup-shaped metal material 20 by the above-structured machine for producing a metal part having internal threads.

Fig. 1 shows a state of the cup-shaped metal material 20 immediately before processing.

The second core bar 50 is axially inserted into the center of the first core bar 30. Accordingly, to form female threads, the second core bar 50 can be tightly adhered axially to the inner wall 38 of the first core bar 30, and the first core bar 30 can be used as a rigid body.

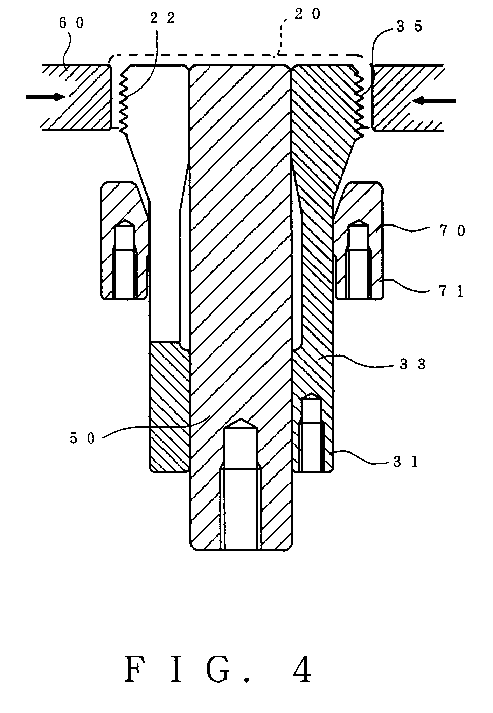

Then, the cup-shaped metal material 20 is put on the male thread section 35 of the first core bar 30 as shown in Fig. 4. Then, the outer periphery of the cup-shaped metal material 20 is pressed in a centripetal direction by the six punches 60 to deform the cup-shaped metal material 20 and to transfer the male thread section 35 of the first core bar 30 to the inner wall 21 of the cup-shaped metal material 20, thereby forming a female thread section 22.

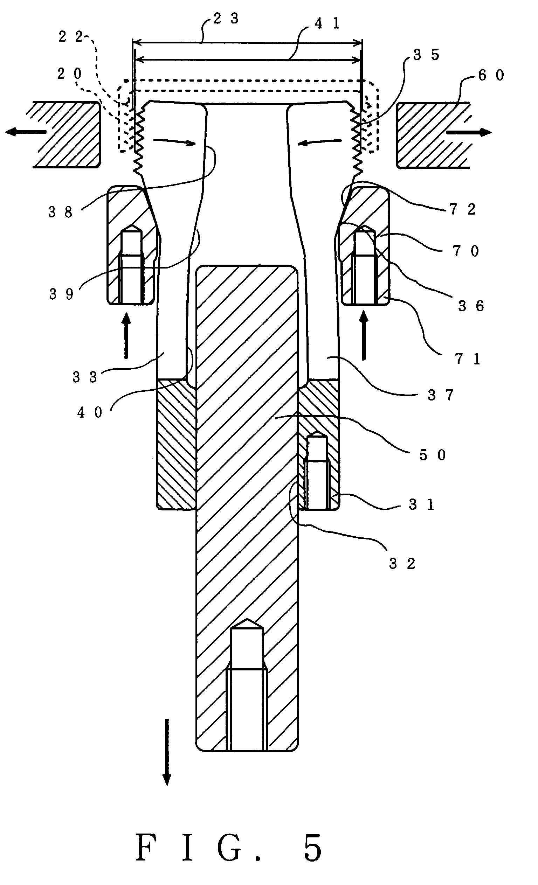

After that, the second core bar 30 which was axially inserted in the center of the first core bar 30 is retracted to the inner wall 40 of the elastic deformable section 37 as shown in Fig. 5.

Then, the ring-shaped member 71 is moved by a hydraulic cylinder (not shown) toward the sloped section 36 of the male thread core bar member 33 of the first core bar 30, and the sloped inner wall 72 is pushed along the sloped section 36. Thus, the male thread core bar member 33 can have the elastic deformable section 37 deflected to contract the diameter of the male thread section 35 in a centripetal direction, and a thread ridge diameter 41 of the male thread section 35 of the first core bar 30 can be made smaller than a thread ridge diameter 23 of the formed female thread section 22.

Therefore, the cup-shaped metal material 20 having the female thread section 22 formed therein can be disengaged from the first core bar 30 without making a relative turning. In other words, the cup-shaped metal material 20 having the female thread section 22 formed therein can be removed without twisting.

Thus, after removing the cup-shaped metal material 20 having the female thread section 22 formed therein without twisting, the pressing tool 70 is returned to the state as shown in Fig. 1. Accordingly, it is made ready for the next processing.

The above embodiment has been described on the application to the cup-shaped metal material 20. But, the invention is not limited to it and may be applied to any shape, provided that female threads are cold-pressed on the inner wall.

And, the description has been made on a case that the six slits 34 were provided, but the number of slits may be determined as desired. The slits are preferably formed in a large number to facilitate the operation by the pressing tool 70, but their number is desirably 6 to 8 in view of the processing steps.

Besides, the number of punches 50 may be increased or reduced depending on the number of the male thread sections 35.

As described above, according to the inventions of claims 1 to 6, since the diameter of the male thread section of the first core bar can be contracted in the centripetal direction after forming the internal threads, the cylinder having the internal threads formed can be removed readily from the male thread section, and the cylinder having the internal threads can be obtained without twisting the core bar or the cylinder having the internal threads formed like prior art.

Since the first core bar is formed of a single body, there is no possibility of having a disadvantage that the obtained internal threads have a mismatching pitch.

## Claims

1. A method for producing a metal part having internal threads, comprising the steps of:
inserting a second core bar axially into the center of a first core bar which is axially divided into a multiple number and has a male thread section on its outer periphery;
putting a metal cylinder on the male thread section of the first core bar;
applying a pressure by a plurality of punches to the outer periphery of the metal cylinder in a centripetal direction to deform the metal cylinder to transfer the male thread section of the first core bar to the inner wall of the metal cylinder to form a female thread section;
removing the second core bar which has been axially inserted into the center of the first core bar from the male thread section; and
contracting the diameter of the male thread section of the first core bar in a centripetal direction to enable the removal of the metal cylinder having the female thread section formed therein without twisting.

2. A method for producing a metal part having internal threads according to claim 1, wherein when the female threads are formed, the second core bar is tightly adhered axially to the inner wall of the first core bar, the first core bar is served as a rigid body to form the female threads, and the second core bar is removed from the male thread section, the diameter of the male thread section of the first core bar is contracted in the centripetal direction to make a thread ridge diameter of the male thread section of the first core bar smaller than that of the formed female threads.

3. A machine for producing a metal part having internal threads, comprising:
a first core bar which is axially divided into a multiple number and has a male thread section formed on its outer periphery;
a second core bar which is axially inserted into the center of the first core bar;
a plurality of punches which are provided around the male threshold section of the first core bar; and
a pressing tool which is provided on the outer periphery of the first core bar and contracts the diameter of the male thread section of the first core bar in a centripetal direction.

4. A machine for producing a metal part having internal threads according to claim 3, wherein the first core bar has a base having a through hole, and a male thread core bar member which is interconnected with the base, formed via slits which are disposed parallel to an axis and equal in a radial direction and has a male thread section formed on the outer periphery of its leading end.

5. A machine for producing a metal part having internal threads according to claim 4, wherein each male thread core bar member has a male thread section, a sloped section and an elastic deformable section for contracting the male thread section.

6. A machine for producing a metal part having internal threads according to any one of claim 3 through claim 5, wherein the pressing tool is made of a ring-shaped member having a sloped inner wall corresponding to the sloped section of the male thread core bar member of the first core bar.
